(19) **Europäisches Patentamt**
**European Patent Office**
**Office européen des brevets**

(11) **EP 3 335 423 B1**

(12) **EUROPÄISCHE PATENTSCHRIFT**

(45) Veröffentlichungstag und Bekanntmachung des Hinweises auf die Patenterteilung:
**15.01.2025 Patentblatt 2025/03**

(21) Anmeldenummer: **16757150.4**

(22) Anmeldetag: **05.08.2016**

(51) Internationale Patentklassifikation (IPC):
**H04N 19/132** (2014.01)     **H04N 19/154** (2014.01)
**H04N 19/182** (2014.01)     **H04N 19/36** (2014.01)
**H03M 7/30** (2006.01)     **G06T 9/00** (2006.01)

(52) Gemeinsame Patentklassifikation (CPC):
**H04N 19/154; H04N 19/132; H04N 19/182; H04N 19/36**

(86) Internationale Anmeldenummer:
**PCT/EP2016/001353**

(87) Internationale Veröffentlichungsnummer:
**WO 2017/025182 (16.02.2017 Gazette 2017/07)**

(54) **VERFAHREN, VORRICHTUNG UND COMPUTERPROGRAMMPRODUKT ZUM KOMPRIMIEREN EINES EINGANGSDATENSATZES**

METHOD, DEVICE, AND COMPUTER PROGRAM PRODUCT FOR COMPRESSING AN INPUT DATA SET

PROCÉDÉ, DISPOSITIF ET LOGICIEL POUR COMPRESSER UN ENSEMBLE DE DONNÉES D'ENTRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2015 DE 102015010412**

(43) Veröffentlichungstag der Anmeldung:
**20.06.2018 Patentblatt 2018/25**

(73) Patentinhaber: **Universität Stuttgart**
**70174 Stuttgart (DE)**

(72) Erfinder:
• **SIMON, Sven**
**71638 Ludwigsburg (DE)**
• **RICHTER, Thomas**
**91052 Erlangen (DE)**
• **WANG, Zhe M. Sc**
**71116 Gärtringen (DE)**
• **BAROUD, Yousef M. Sc**
**70619 Stuttgart (DE)**
• **NAJMABADI, Mahdi M. Sc**
**70499 Stuttgart (DE)**

(74) Vertreter: **Müller-Boré & Partner**
**Patentanwälte PartG mbB**
**Friedenheimer Brücke 21**
**80639 München (DE)**

(56) Entgegenhaltungen:
**WO-A1-2005/036528     US-A1- 2007 208 557**

• **WANG Z ET AL: "SSPQ - spatial domain perceptual image codec based on subsampling and perceptual quantization", 19TH IEEE INTERNATIONAL CONFERENCE ON IMAGE PROCESSING (ICIP), 2012, IEEE, 30 September 2012 (2012-09-30), pages 1061 - 1064, XP032333358, ISBN: 978-1-4673-2534-9, DOI: 10.1109/ICIP.2012.6467046**
• **JOEL SOLE ET AL: "Transform Coefficient Coding in HEVC", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 December 2012 (2012-12-01), pages 1765 - 1777, XP011487805, ISSN: 1051-8215, DOI: 10.1109/ TCSVT.2012.2223055**

- **KAI LIU: "A just noticeable distortion based perceptually lossless image compression codec", 1 June 2012 (2012-06-01), XP055313903, Retrieved from the Internet <URL:http://elib. uni-stuttgart. de/bitstream/11682/2911/1/STUD_2360.pdf> [retrieved on 20161025], DOI: http://dx.doi. org/10.18419/opus-2894**

**Beschreibung**

Die Erfindung betrifft ein Verfahren, eine Vorrichtung und ein Computerprogrammprodukt zum Komprimieren eines Eingangsdatensatzes.

Eine Datenkompression oder Datenkomprimierung ist ein Vorgang, bei dem die Menge digitaler Daten reduziert wird. Eine Datenkompression findet heutzutage bei fast jeglicher Übertragung digitaler Daten statt. Sie hilft Ressourcen bei der Übertragung der Daten zu sparen, indem die Daten in einer Form übertragen werden, die, abhängig von der Anwendung, eine möglichst geringe Bandbreite, eine möglichst kurze Übertragungszeit und/oder einen möglichst geringen Speicherplatz benötigt.

Grundsätzlich wird bei der Datenkompression versucht, überflüssige Informationen mit möglichst wenigen Bits zu übertragen. Dazu werden die Daten in eine Darstellung überführt, mit der sich alle oder zumindest die meisten Informationen in kürzerer Form darstellen lassen. Diesen Vorgang übernimmt ein Encoder und man bezeichnet den Vorgang als Kompression oder Komprimierung. Mit Hilfe eines Decoders kann der Vorgang wieder umgekehrt werden, was als Dekompression oder Dekomprimierung bezeichnet wird. Eine Kompression bzw. Dekompression kann verlustfrei oder verlustbehaftet sein.

Man spricht von einer verlustfreien Kompression, wenn aus den komprimierten Daten wieder alle Originaldaten gewonnen werden können. Dies ist beispielsweise bei der Kompression ausführbarer Programmdateien notwendig.

Dagegen können bei der verlustbehafteten Kompression die Originaldaten nicht mehr aus den komprimierten Daten zurückgewonnen werden, das heißt, ein Teil der Information geht verloren. Bei verlustbehafteten Verfahren werden vor allem Informationen, welche für die Wahrnehmung dieser Informationen unwichtig oder irrelevant sind, entfernt. Diese verlustbehafteten Verfahren werden insbesondere zur Bild- oder Videokompression (z.B. JPEG) oder zur Audiodatenkompression (z.B. MP3) eingesetzt.

Je nach Kompressionsrate werden bei der verlustbehafteten Kompression mehr oder weniger Informationen entfernt. Gerade bei höheren Kompressionsraten kann die dabei verwendete Informationsreduktion so groß sein, dass diese für einen Benutzer wahrnehmbar ist oder für eine technische Anwendung, die diese Daten weiterverarbeitet, inakzeptabel ist. Dies macht sich z.B. bei komprimierten Bildern, Videos oder Musikdateien durch eine wahrnehmbar verschlechterte Qualität bzw. durch das Auftreten von wahrnehmbaren Artefakten bemerkbar. In technischen Anwendungen kann eine verlustbehaftete Kompression auch zu verfälschten Ergebnissen führen. Beispielsweise können die bei der Bestimmung von Objektgrößen ermittelten Werte durch eine verlustbehaftete Kompression verfälscht und somit gegebenenfalls unbrauchbar werden.

Die Veröffentlichung Z. Wang et al: "SSPQ - spatial domain perceptual image codec based on subsampling and perceptual quantization", 19th IEEE International Conference on Image Processing (ICIP), 2012, IEEE, 30. September 2012, Seiten 1061-1064, XP032333358, DOI: 10.1109/ICIP.2012.6467046, ISBN: 978-1-4673-2534-9, offenbart einen Algorithmus zur Bildkomprimierung, welcher auf einer Unterabtastung und einer wahrnehmungsbasierten Quantisierung beruht.

Die Veröffentlichung J. Sole et al: "Transform Coefficient Coding in HEVC", IEEE Transactions on circuits and systems for video technology, IEEE Service center, Piscataway, NJ, US, Bd. 22, Nr. 12, 1. Dezember 2012, Seiten 1765-1777, XP011487805, ISSN: 1051-8215, DOI: 10.1109/TCSVT.2012.2223055, offenbart ein Verfahren zum High Efficiency Video Coding (HEVC).

Die Druckschrift WO 2005/036528 A1 offenbart ein Verfahren zum Encodieren eines digitalen Signals in einen skalierbaren Bitstream.

Die Veröffentlichung K. Liu: "A Just Noticeable-Distortion Based Perceptually Lossless Image Compression Codec", 1. Juni 2012, XP055313903, DOI: http://dx.doi.org/10.18419/opus-2894, offenbart eine Studie über ein Bildkomprimierungsverfahren, welches auf einen Just-Noticeable-Distortion (JND) Algorithmus basiert.

Es ist eine Aufgabe der vorliegenden Erfindung, ein Verfahren zum Komprimieren eines Eingangsdatensatzes bereitzustellen, mit dem das Verhältnis aus Qualität und Kompressionsrate im Vergleich zu herkömmlichen verlustbehafteten Kompressionsverfahren verbessert bzw. erhöht werden kann. Ferner ist es eine Aufgabe der vorliegenden Erfindung, eine entsprechende Vorrichtung und ein entsprechendes Computerprogrammprodukt anzugeben.

Diese Aufgabe wird durch die Gegenstände der nebengeordneten Ansprüche gelöst. Vorteilhafte Ausführungsformen sind Gegenstand der Unteransprüche.

Ein erster unabhängiger Aspekt zur Lösung der Aufgabe betrifft ein Verfahren zum Komprimieren eines Eingangsdatensatzes, welcher einen oder mehrere Eingangswerte, insbesondere eine Vielzahl von Eingangswerten, umfasst. Das

Verfahren umfasst die folgenden Schritte:

- für jeden Eingangswert Ermitteln, d.h. Bestimmen bzw. Messen bzw. Berechnen, eines Toleranzbereichs;
- Erzeugen encodierter verlustbehafteter Werte durch ein verlustbehaftetes Encodieren der Eingangswerte;
- Erzeugen von zu den Eingangswerten zugehörigen decodierten verlustbehafteten Werten, insbesondere durch ein Decodieren der encodierten verlustbehafteten Werte;

- Erzeugen von Differenzwerten durch Subtrahieren jedes decodierten verlustbehafteten Wertes von dem jeweils zugehörigen Eingangswert;
- Vergleichen jedes Differenzwertes mit dem jeweils zugehörigen ermittelten Toleranzbereich, um festzustellen, ob der Differenzwert innerhalb des jeweils zugehörigen Toleranzbereichs liegt;
- Erzeugen von zu den encodierten verlustbehafteten Werten zugehörigen encodierten Korrekturwerten bzw. Verfeinerungswerten auf Basis der Differenzwerte, wobei die encodierten Korrekturwerte Offset-Werte sind, welche zu den zugehörigen encodierten verlustbehafteten Werten addiert werden können, wobei encodierte Korrekturwerte nur für solche Differenzwerte erzeugt werden, die außerhalb des jeweils zugehörigen ermittelten Toleranzbereichs liegen; und
- Bereitstellen eines Ausgangsdatensatzes in Abhängigkeit des Vergleichs der Differenzwerte mit den Toleranzbereichen, wobei das Bereitstellen des Ausgangsdatensatzes ein Bereitstellen von kombinierten encodierten Werten umfasst, wobei die kombinierten encodierten Werte durch ein Zusammenfügen der encodierten verlustbehafteten Werte und derjenigen encodierten Korrekturwerte, deren zugehörigen Differenzwerte außerhalb des zugehörigen ermittelten Toleranzbereichs liegen, erhalten werden.

Der Begriff "Wert" umfasst im Sinne der vorliegenden Beschreibung ganz allgemein eine Information. Ein oder mehrere Werte können auch als Daten bezeichnet werden. Ein oder mehrere, insbesondere eine Vielzahl von Werten, bilden einen Datensatz.

Der Eingangsdatensatz kann z.B. Werte bzw. Daten eines Bildes, insbesondere Graustufen-Werte aller Pixel eines schwarz-weiß-Bildes oder Farbwerte-Werte eines Farbbildes umfassen. Der Eingangsdatensatz kann z.B. auch die Graustufen-Werte aller Voxel eines 3D-Computertomographie-Datensatzes umfassen. Genauso gut kann der Eingangsdatensatz Pegel und/oder Frequenzwerte eines Musikstücks als Werte im Sinne der vorliegenden Beschreibung umfassen.

Die Werte können insbesondere Abtastwerte z.B. eines Sensors sein, der zeitlich und/oder örtlich eine physikalische Größe bestimmt. Sensoren können beispielsweise Bildsensoren oder Punktsensoren für eine physikalische Größe wie ein elektrisches Feld, ein magnetisches Feld, eine elektrische Ladung, eine mechanische Kraft, etc. sein.

Der Eingangsdatensatz umfasst vorzugsweise nur eine Teilmenge von Werten bzw. Daten eines Gesamtdatensatzes z.B. eines Bildes oder eines Sensors. Mit anderen Worten ist die Vielzahl von Werten des Eingangsdatensatzes nur eine Teilmenge eines Gesamtdatensatzes. Der Eingangsdatensatz kann z.B. eine oder mehrere Bitfolgen umfassen, welche die Werte des Eingangsdatensatzes repräsentieren. Insbesondere kann der Eingangsdatensatz einen Bitdatenstrom, d.h. einen Eingangs-Bitdatenstrom, umfassen.

Der Eingangsdatensatz kann z.B. im Falle eines Bildsensors einen Block von 8x8 Pixel-Grauwerten oder einen Block von 16x16 Pixel-Farbwerten oder eine Bildzeile oder auch nur ein einzelnes oder mehrere Pixel umfassen.

Für einen Punktsensor kann der Eingangsdatensatz z.B. eine bestimmte Anzahl zeitlich oder räumlich benachbarter Abtastwerte umfassen. Beispielsweise kann der Eingangsdatensatz zehn Abtastwerte einer Photodiode oder zwanzig Abtastwerte eines Hallsensors umfassen.

Unter einem Toleranzbereich wird allgemein ein Wertebereich, d.h. ein Bereich zwischen einem minimalen und einem maximalen Wert, verstanden. Die Toleranzbereiche werden insbesondere derart ermittelt bzw. festgelegt, dass eine visuell verlustlose Kompression gewährleistet werden kann oder dass für eine technische Anwendung, welche die komprimierten Daten weiterverarbeitet, keine oder eine nur unwesentliche Veränderung der von der technischen Anwendung erhaltenen bzw. erzeugten Ergebnisse verursacht. Insbesondere werden die Toleranzbereiche derart ermittelt, dass ein von einem verlustbehafteten Encoder erzeugter komprimierter und verlustbehafteter Wert, der sich innerhalb eines zugehörigen Toleranzbereichs befindet, zu keiner oder nur einer unwesentlichen bzw. nicht wahrnehmbaren Degradation bzw. Distorsion des jeweiligen bzw. zugehörigen Eingangswertes führt. Insbesondere werden die Toleranzbereiche derart ermittelt, dass ein von einem verlustbehafteten Encoder erzeugter komprimierter und verlustbehafteter Wert, der sich innerhalb eines zugehörigen Toleranzbereichs befindet, lediglich zu einer akzeptablen Degradation bzw. Distorsion des jeweiligen bzw. zugehörigen Eingangswertes führt. Dabei ist unter einer akzeptablen Distorsion eine Distorsion zu verstehen, die abhängig von der jeweiligen technischen Anwendung, irrelevant ist bzw. höchstens so groß ist, dass die Ergebnisse, d.h. die durch die verlustbehaftete Kompression erhaltenen komprimierten Werte, nur unwesentlich bzw. in einem akzeptablen Maß beeinflusst sind. Ein komprimierter und verlustbehafteter Wert, der außerhalb des zugehörigen Toleranzbereiches liegt, kann dagegen eine wahrnehmbare oder eine inakzeptable Degradation bzw. Distorsion des zugehörigen Eingangswertes bewirken. Für technische Anwendungen kann ein komprimierter Wert, der außerhalb des Toleranzbereiches liegt, zu anderen, insbesondere verfälschten und/oder inakzeptablen, Ergebnissen führen.

Der Toleranzbereich bzw. die Toleranzbereiche werden vorzugsweise auf Basis der Eingangswerte ermittelt. Weiter vorzugsweise wird zum Ermitteln der Toleranzbereiche ein sogenannter Just-Noticeable-Distortion-Algorithmus verwendet. Mit einem solchen Algorithmus ist es vorteilhafterweise möglich, den Toleranzbereich auf Basis der Eingangswerte derart zu ermitteln, dass eine visuell verlustlose Kompression gewährleistet ist. Mit anderen Worten ist es mit einem Just-Noticeable-Distortion-Algorithmus möglich, die Toleranzbereiche derart zu ermitteln, dass die von einem verlustbehafteten Encoder erzeugten komprimierten und verlustbehafteten Werte, die sich innerhalb der Toleranzbereiche befinden, zu keiner oder nur einer unwesentlichen bzw. nicht wahrnehmbaren oder zu einer noch akzeptablen Degradation bzw. Distorsion des Eingangsdatensatzes führen.

Ein Toleranzbereich kann beispielsweise durch einen maximalen und minimalen Wert definiert sein. Es ist aber auch möglich, dass der Toleranzbereich lediglich durch eine Toleranzgrenze und/oder durch einen Schwellenwert, insbesondere durch einen Wahrnehmungs- oder Akzeptanz-Schwellenwert definiert ist. Ein solcher Wahrnehmungs- oder Akzeptanz-Schwellenwert gibt die Abweichung oder Differenz eines verlustbehafteten Wertes zum Originalwert an, ab der eine wahrnehmbare oder unakzeptable Verschlechterung bzw. Distorsion auftritt. Mit anderen Worten gibt ein Wahrnehmungs- bzw. Akzeptanz-Schwellenwert an, welche Abweichung oder Differenz eines verlustbehafteten Wertes zum Originalwert möglich oder zulässig ist, so dass diese Abweichung oder Differenz gerade nicht mehr wahrnehmbar bzw. gerade noch akzeptabel ist. Ist der Toleranzbereich mit Hilfe eines Schwellenwertes definiert, so kann der Toleranzbereich z.B. durch alle Werte unterhalb oder oberhalb des Schwellenwertes gegeben sein. Der Schwellenwert selbst kann innerhalb oder außerhalb des Toleranzbereiches liegen.

Der Toleranzbereich kann z.B. eine maximal zulässige Abweichung eines mittels eines verlustbehafteten Encoders komprimierten Pixel-Grauwerts vom originalen Grauwert definieren, oder z.B. eine maximal zulässige Abweichung eines mittels eines verlustbehafteten Encoders komprimierten Abtastwertes eines Sensor-Signals vom Originalwert des Sensor-Signals definieren.

Der Toleranzbereich kann für jeden Wert verschieden sein. Beispielsweise sind bei einem Blutdrucksensor in erster Linie der Maximalwert und der Minimalwert relevant und mit einer Messunsicherheit von 10% bestimmbar, während die Genauigkeit der Abtastwerte zwischen diesen Werten wenig relevant ist. Somit kann der Toleranzbereich für die Zwischenwerte größer sein als für die Randwerte. Für eine Thermografie zur Analyse der Körpertemperatur des Menschen sind Temperaturbereiche außerhalb der Temperatur von 35°C bis 42°C weniger relevant und können daher einen größeren Toleranzbereich aufweisen und somit mit höheren Verlusten komprimiert werden. Beispielsweise ist zum dimensionellen Messen auf der Basis von Bildern der Toleranz-Bereich von Bildkanten vorzugsweise gleich Null, da die Bildkanten zur Objektvermessung verwendet werden. Außerhalb der Bildkanten-Bereiche können die Toleranzbereiche jedoch von Null verschieden sein, sofern diese auf das Messergebnis keinen oder einen nur unwesentlichen Einfluss haben.

Das Erzeugen encodierter verlustbehafteter Werte durch ein verlustbehaftetes Encodieren der Eingangswerte wird vorzugsweise mit Hilfe eines verlustbehafteten Encoders wie z.B. einem JPEG-Encoder oder einem MP3-Encoder durchgeführt. Es versteht sich, dass abhängig von der jeweiligen Anwendung prinzipiell jeder existierende CODEC bzw. verlustbehaftete Encoder dazu verwendet werden kann.

Das Erzeugen von zu den Eingangswerten zugehörigen decodierten verlustbehafteten Werten kann mit Hilfe einer Decodiereinheit oder eines entsprechenden Decoders erfolgen. Insbesondere können die zu den Eingangswerten zugehörigen decodierten verlustbehafteten Werte durch ein Decodieren der encodierten verlustbehafteten Werte erfolgen.

Durch das Erzeugen von Differenzwerten mittels Subtrahierens jedes decodierten verlustbehafteten Wertes von dem jeweils zugehörigen Eingangswert wird der durch die vorgenommene verlustbehaftete Kompression bzw. Encodierung resultierende Verlust bzw. die dadurch resultierende Distorsion ermittelt.

Durch das Vergleichen jedes Differenzwertes mit dem jeweils zugehörigen ermittelten Toleranzbereich wird festgestellt, ob der Differenzwert innerhalb des zugehörigen Toleranzbereiches bzw. innerhalb der zugehörigen Toleranzgrenze liegt. Für den Vergleich wird somit stets der zu dem jeweiligen Differenzwert zugehörige Toleranzbereich herangezogen, d.h. derjenige Toleranzbereich, welcher zu dem Eingangswert gehört, aus dem der jeweilige Differenzwert erzeugt wurde.

Die erzeugten encodierter Korrekturwerte sind insbesondere Offset-Werte bzw. Verfeinerungswerte, welche zu den zugehörigen encodierten verlustbehafteten Eingangswerten derart hinzugefügt oder addiert werden können, dass die Distorsion der durch das Verfahren bereitgestellten Ausgangswerte begrenzt ist bzw. dass die durch das Verfahren bereitgestellten und decodierten Werte innerhalb des Toleranzbereiches liegen. Mit Hilfe der Korrektur bzw. Verfeinerungswerte kann somit vorteilhafterweise die durch die verlustbehaftete Kompression bzw.

Encodierung der Eingangswerte bewirkte Distorsion zumindest teilweise wieder ausgeglichen werden.

Ein zu einem Eingangswert zugehöriger Korrekturwert kann z.B. der zugehörige Differenzwert sein. Alternativ kann ein zu einem Eingangswert zugehöriger Korrekturwert die Differenz zwischen dem zugehörigen Differenzwert und einer zugehörigen Toleranzgrenze sein.

Der Ausgangsdatensatz umfasst wie der Eingangsdatensatz vorzugsweise einen oder mehrere Ausgangswerte. Der Ausgangsdatensatz kann z.B. eine oder mehrere Bitfolgen umfassen, welche die Werte des Ausgangsdatensatzes repräsentieren. Insbesondere kann der Ausgangsdatensatz einen Bitdatenstrom umfassen.

Das Bereitstellen des Ausgangsdatensatzes kann insbesondere ein Ausgeben und/oder ein Übermitteln und/oder ein Anzeigen umfassen.

Mit Hilfe des erfindungsgemäßen Verfahrens kann in sehr effektiver Weise eine verlustbehaftete Kompression, z.B. mit Hilfe eines bekannten CODECs, durchgeführt werden. Dabei kann mit Hilfe des aus dem Eingangsdatensatz ermittelten Toleranzbereichs vorteilhafterweise gewährleistet werden, dass der durch das Verfahren bereitgestellte Ausgangsdatensatz eine bestimmte Qualitätsanforderung erfüllt. Insbesondere können mit dem erfindungsgemäßen Verfahren in sehr effizienter Weise, d.h. ohne die Kompressionsrate stark zu erhöhen, wahrnehmbare Distorsionen bzw. Artefakte, welche mit der verlustbehafteten Kompression eines herkömmlichen Encoders einhergehen, reduziert bzw. vermieden werden. Folglich kann mit dem erfindungsgemäßen Verfahren das Verhältnis aus Qualität und Kompressionsrate im Vergleich zu herkömmlichen verlustbehafteten Kompressionsverfahren verbessert bzw. erhöht werden.

In einer bevorzugten Ausführungsform des erfindungsgemäßen Verfahrens umfasst das Erzeugen der encodierten Korrekturwerte eine verlustlose oder verlustbehaftete Encodierung und/oder Kompression der Differenzwerte.

Für eine verlustbehaftete Kompression können z.B. die Korrekturwerte bzw. die Differenzwerte quantisiert werden. Alternativ oder zusätzlich können die quantisierten Korrekturwerte mit Hilfe eines Entropie-Encoders encodiert bzw. komprimiert werden.

In einer weiteren bevorzugten Ausführungsform umfasst das Erzeugen der encodierten Korrekturwerte eine verlustlose Encodierung und/oder Kompression der Differenz zwischen den Differenzwerten und einer Toleranzgrenze, welche vorzugsweise mit einem Just-Noticeable-Distortion-Algorithmus ermittelt wird.

Durch die verlustlose Encodierung wird vorteilhafterweise gewährleistet, dass sämtliche Distorsionen von decodierten Ausgangswerten innerhalb der jeweiligen Toleranzbereiche bzw. Toleranzgrenzen liegen.

In einer weiteren bevorzugten Ausführungsform erfolgt das Erzeugen encodierter Korrekturwerte in Abhängigkeit des Vergleichs der Differenzwerte mit den Toleranzbereichen.

Ein encodierter Korrekturwert wird nur erzeugt, wenn der zugehörige Differenzwert außerhalb des ermittelten zugehörigen Toleranzbereiches bzw. der Toleranzgrenze liegt. Auf diese Weise kann vorteilhafterweise Rechenzeit bzw. Rechenleistung eingespart werden. Zudem kann vorteilhafterweise die Datenmenge in Folge der erzeugten Korrekturwerte gering gehalten werden. Mit anderen Worten werden encodierte Korrekturwerte nur für solche Differenzwerte erzeugt, die außerhalb des jeweils zugehörigen ermittelten Toleranzbereichs liegen. Mit anderen Worten werden encodierte Korrekturwerte nur für solche Eingangswerte erzeugt, deren zugehörige Differenzwerte außerhalb des jeweils zugehörigen ermittelten Toleranzbereichs liegen.

In einer weiteren bevorzugten Ausführungsform umfasst das Bereitstellen bzw. Ausgeben des Ausgangsdatensatzes ein Bereitstellen bzw. Ausgeben der encodierten verlustbehafteten Werte. Alternativ oder zusätzlich umfasst das Bereitstellen bzw. Ausgeben des Ausgangsdatensatzes ein Bereitstellen bzw. Ausgeben der encodierten Korrekturwerte. Weiter alternativ oder zusätzlich umfasst das Bereitstellen bzw. Ausgeben des Ausgangsdatensatzes ein Bereitstellen bzw. Ausgeben von kombinierten encodierten Werten, wobei die kombinierten encodierten Werte eine Kombination der encodierten verlustbehafteten Werte und der encodierten Korrekturwerte darstellen.

Durch das Bereitstellen bzw. Ausgeben der encodierten verlustbehafteten Werte kann vorteilhafterweise gewährleistet werden, dass auch ein herkömmlicher Decoder, beispielsweise ein gewöhnlicher JPEG-Decoder, die Ausgangsdaten bzw. den Ausgangsdatensatz decodieren bzw. dekomprimieren kann. Zwar wird dann keine Qualitätsverbesserung erreicht, aber der Ausgangsdatensatz kann auch mit einem herkömmlichen Decoder mit der herkömmlichen Qualität decodiert und weiter verwendet werden.

Das Bereitstellen bzw. Ausgeben der encodierten Korrekturwerte und/oder von kombinierten encodierten Werten ist insbesondere dann von Vorteil, wenn die encodierten Korrekturwerte und/oder die kombinierten encodierten Werte von einem Decoder verarbeitet werden können, so dass der Decoder in der Lage ist, decodierte Daten mit einer verbesserten Qualität bereitzustellen.

Das Bereitstellen bzw. Ausgeben des Ausgangsdatensatzes umfasst ein Bereitstellen bzw. Ausgeben von kombinierten encodierten Werten, wobei die kombinierten encodierten Werte durch ein Zusammenfügen, insbesondere ein Übertragen und/oder Addieren, der encodierten verlustbehafteten Werte und derjenigen encodierten Korrekturwerte, deren zugehörigen Differenzwerte außerhalb des zugehörigen ermittelten Toleranzbereichs liegen, erhalten werden. Das Zusammenfügen bzw. Übertragen bzw. Addieren kann z.B. mit Hilfe eines Multiplexers erfolgen.

Ein weiterer unabhängiger Aspekt zur Lösung der Aufgabe betrifft eine Vorrichtung zum Komprimieren eines Eingangsdatensatzes, welcher einen oder mehrere Eingangswerte umfasst. Dabei umfasst die Vorrichtung:

- eine Toleranzbereichsermittlungseinheit zum Ermitteln eines Toleranzbereichs bzw. einer Toleranzgrenze;
- einen Encoder zum Erzeugen encodierter verlustbehafteter Werte durch ein verlustbehaftetes Encodieren der Eingangswerte;
- eine Decodiereinheit zum Erzeugen von zu den Eingangswerten zugehörigen decodierten verlustbehafteten Werten, insbesondere durch ein Decodieren der encodierten verlustbehafteten Werte;
- eine Subtrahiereinheit zum Subtrahieren jedes decodierten verlustbehafteten Wertes von dem jeweils zugehörigen Eingangswert und Erzeugen von Differenzwerten;

- eine Vergleichseinheit zum Vergleichen jedes Differenzwertes mit dem jeweils zugehörigen ermittelten Toleranzbereich, um festzustellen, ob der Differenzwert innerhalb des jeweils zugehörigen Toleranzbereichs liegt;
- eine Korrekturwerterzeugungseinheit zum Erzeugen von zu den encodierten verlustbehafteten Werten zugehörigen encodierten Korrekturwerten auf Basis der Differenzwerte, wobei die encodierten Korrekturwerte Offset-Werte sind, welche zu den zugehörigen encodierten verlustbehafteten Werten addiert werden können, wobei die Korrekturwerterzeugungseinheit ausgelegt ist, encodierte Korrekturwerte nur für solche Differenzwerte zu erzeugen, die außerhalb des jeweils zugehörigen ermittelten Toleranzbereichs liegen; und
- eine Ausgangsdatensatz-Bereitstellungseinheit zum Bereitstellen bzw. Ausgeben eines Ausgangsdatensatzes in Abhängigkeit eines Vergleichs der Differenzwerte mit den Toleranzbereichen, wobei der Ausgangsdatensatz kombinierte encodierte Werte umfasst, wobei die kombinierten encodierten Werte aus den encodierten verlustbehafteten Werten und denjenigen encodierten Korrekturwerten, deren zugehörigen Differenzwerte außerhalb des zugehörigen ermittelten Toleranzbereichs liegen, zusammengefügt sind.

In einer bevorzugten Ausführungsform ist der Encoder zum Erzeugen encodierter verlustbehafteter Werte ein JPEG-Encoder oder ein MP3-Encoder oder ein MPEG-Encoder oder ein H265-Encoder. Insbesondere kann der Encoder zum Erzeugen encodierter verlustbehafteter Werte ein JPEG 2000-, JPEG XR- oder JPEG LS-Encoder sein. Alternativ oder zusätzlich ist die Decodiereinheit zum Erzeugen von zu den Eingangswerten zugehörigen decodierten verlustbehafteten Werten vorzugsweise ein Decoder, z.B. ein JPEG-Decoder oder ein MP3-Decoder oder ein MPEG-Decoder oder ein H265-Decoder. Insbesondere kann die Decodiereinheit zum Erzeugen von zu den Eingangswerten zugehörigen decodierten verlustbehafteten Werten ein JPEG 2000-, JPEG XR- oder ein JPEG LS - Decoder sein. Alternativ oder zusätzlich ist die Toleranzbereichsermittlungseinheit vorzugsweise ausgelegt, um den Toleranzbereich auf Basis eines Just-Noticeable-Distortion-Algorithmus zu ermitteln. Alternativ oder zusätzlich umfasst die Korrekturwerterzeugungseinheit vorzugsweise eine Quantisierungseinheit, insbesondere eine Wahrnehmungs-Quantisierungseinheit (engl.: perceptual quantization unit), und/oder einen Entropie-Encoder. Alternativ oder zusätzlich umfasst die Ausgangsdatensatz-Ausgabeeinheit vorzugsweise einen Multiplexer, insbesondere zum Erzeugen und/oder Ausgeben von kombinierten encodierten Werten und/oder zum Bereitstellen des Ausgangsdatensatzes, z.B. in Form eines Bitdatenstroms.

Ein weiterer unabhängiger Aspekt zur Lösung der Aufgabe betrifft ein Computerprogrammprodukt, welches maschinenlesbaren Programmcode umfasst, der, wenn er geladen wird auf einem Computer, zur Ausführung eines erfindungsgemäßen Verfahrens geeignet ist.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen Aspekte.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann, und daher in Erwägung gezogen und auch als von der Beschreibung umfasst angesehen werden soll.

Kurze Beschreibung der Zeichnungen

Figur 1    zeigt eine schematische Darstellung der fundamentalen Blöcke eines JND Modells in der Pixel-Domäne;

Figur 2    zeigt Matrizen zum Berechnen der durchschnittlichen Hintergrund-Lumineszenz und des lokalen Kontrasts in vier Richtungen;

Figur 3    zeigt eine schematische Darstellung des Verfahrens bzw. der Vorrichtung gemäß einer Ausführungsform der Erfindung;

Figur 4  zeigt eine schematische Darstellung des erfindungsgemäßen Verfahrens bzw. der erfindungsgemäßen Vorrichtung anhand einer beispielhaften Bildkompression mittels JPEG;

Figur 5  zeigt fotografische Abbildungen zur wahrnehmbaren Distorsion in einem beispielhaften Standard JPEG komprimierten Bild, wobei in a) drei Originalbilder, in b) jeweils ein vergrößerter Ausschnitt der drei Originalbilder, in c) die entsprechenden vergrößerten Ausschnitte des JPEG komprimierten Bildes und in d) die visuell wahrnehmbaren Distorsionen der JPEG komprimierten Bilder in den entsprechenden vergrößerten Ausschnitten gemäß JND dargestellt sind;

Figur 6a  zeigt eine schematische Darstellung einer Quadtree Aufteilung eines 8 x 8 Blocks in 2 x 2 Unterblöcke;

Figur 6b  zeigt einen beispielhaften Raster-Scan in einem 2 x 2 Unterblock zum Ermitteln von Korrektur-bzw. Verfeinerungswerten;

Figur 7  zeigt die 16 möglichen Fix-Muster eines 2 x 2 Unterblocks;

Figur 8  zeigt eine Tabelle mit einer Wahrscheinlichkeitsverteilung der Fix-Muster und des dazugehörigen Huffman Codewortes;

Figur 9  zeigt eine Tabelle zu der Kompressions-Leistung des erfindungsgemäßen Verfahrens bzw. der erfindungsgemäßen Vorrichtung im Vergleich zu der Kompressions-Leistung eines Standard JPEG-Bildes;

Figur 10  zeigt fotografische Aufnahmen zum visuellen Vergleich eines mit dem erfindungsgemäßen Verfahren komprimierten Bildes mit einem entsprechenden JPEG komprimierten Bild, wobei in a) das originale Testbild, in b) ein vergrößerter Ausschnitt des originalen Testbildes, in c) ein visuell verlustfreies JPEG-Bild des vergrößerten Ausschnitts, in d) ein JPEG-Bild des vergrößerten Ausschnitts mit mittlerer Qualität und in e) ein mit dem erfindungsgemäßen Verfahren komprimiertes Bild des vergrößerten Ausschnitts dargestellt ist.

Detaillierte Beschreibung der Zeichnungen

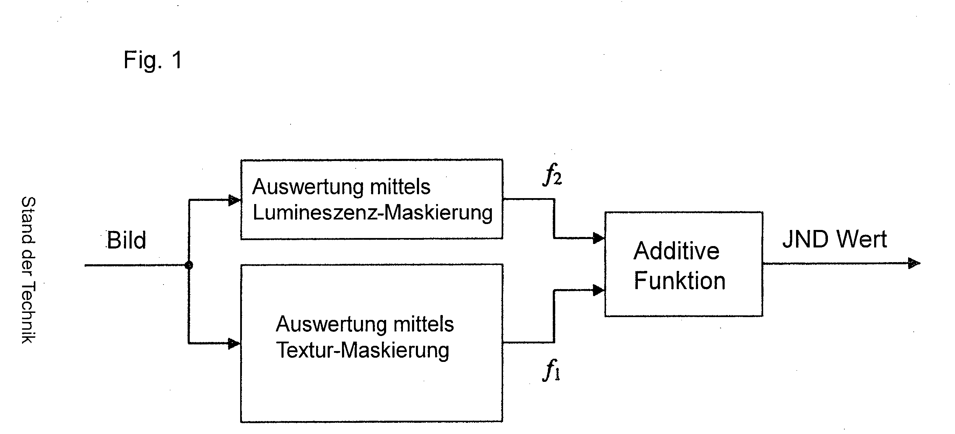

Die **Figur 1** zeigt eine schematische Darstellung der fundamentalen Blöcke eines Just-Noticeable-Distortion (JND) Algorithmus in der Pixel-Domäne am Beispiel eines Bildes. Das Bild wird einerseits mittels einer Lumineszenz-Maskierung und andererseits mittels einer Textur-Maskierung, d.h. z.B. mittels einer Kontrast-Messung, einer Kantendetektion oder einer Textur-Klassifizierung, ausgewertet. Die sich daraus ergebenden Auswerteergebnisse $f_1$ und $f_2$ werden mittels einer nichtlinearen additiven Funktion vereint, mit der eine Just-Noticeable Distortion bzw. ein JND-Wert berechnet wird.

Der JND-Wert ist ein Wahrnehmungs-Schwellenwert, der angibt, ab welcher Abweichung eines Wertes von einem Originalwert, z.B. eines komprimierten Pixel-Graustufen-Wertes vom originalen Graustufen-Wert, eine wahrnehmbare Verschlechterung der Qualität, z.B. der Bildqualität, auftritt. Insbesondere berücksichtigt das JND-Modell bekannte Eigenschaften des menschlich visuellen Systems (engl. "Human Visual System", HVS).

Zur Berechnung des JND-Wertes gibt es im Stand der Technik eine Reihe von mathematischen Modellen. In der Ortsdomäne (engl. spatial domain) wird der JND-Wert typischerweise auf Basis eines N x N Blocks des Originalbildes durch Messung bekannter HVS Maskierungseffekte wie der Lumineszenz-Maskierung und der Textur-Maskierung ermittelt. Die hauptsächlichen Unterschiede zwischen den bisher vorgeschlagenen JND-Modellen in der Pixel-Domäne liegen in den verschiedenen Ansätzen zur Auswertung der Textur-Maskierungseffekte und in der verwendeten additiven Funktion.

Im Folgenden wird kurz ein beispielhaftes JND-Modell beschrieben:
Es seien $bg(i,j)$ die durchschnittliche lokale Hintergrund Lumineszenz und $mg(i,j)$ die maximale lokale Lumineszenz-Aktivität innerhalb eines Blocks, welcher am Pixel-Ort $(i,j)$ zentriert ist. Es sei ferner $p$ ein Pixel-Wert. Dann gilt:

$$bg(i,j) = \frac{1}{32} \sum_{m=1}^{5} \sum_{n=1}^{5} p(i-3+m, j-3+n) \cdot B(m,n) \qquad (1)$$

und

$$mg(i,j) = \max_{k=1,2,3,4} \left| grad_k(i,j) \right| \qquad (2),$$

wobei

$$grad_k(i,j) = \frac{1}{16} \sum_{m=1}^{5} \sum_{n=1}^{5} p(i-3+m, j-3+n) \cdot G_k(m,n) \qquad (3).$$

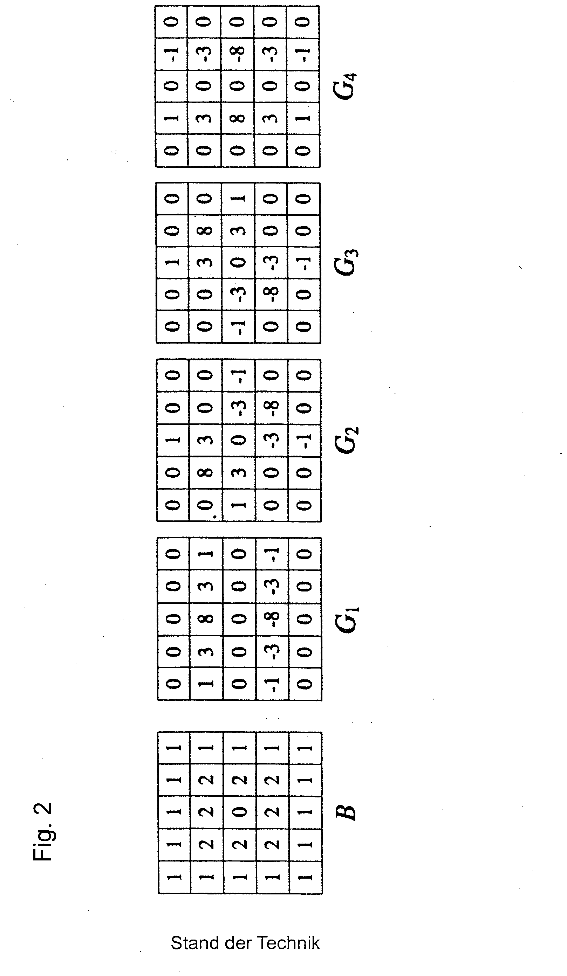

In der **Figur 2** sind die Werte für $B$ und $G_k$ gezeigt. Es seien ferner $f_1(i,j)$ ein Modell für den Textur-Maskierungseffekt und $f_2(i,j)$ ein Modell für den Lumineszenz-Maskierungseffekt, dann ergibt sich der JND Schwellenwert zu:

$$JND(i,j) = \max\left\{ f_1\left[ bg(i,j), mg(i,j) \right], f_2\left[ bg(i,j) \right] \right\} \qquad (4).$$

Wie die Gleichung (4) zeigt, wird der JND-Wert durch den Effekt der Textur-Maskierung und den Effekt der Lumineszenz-Maskierung bestimmt. Für weitere Details, insbesondere zu den Berechnungen von $f_1$ und $f_2$ wird auf die Veröffentlichung C.-H. Chou und Y.-C. Li, "A perceptually tuned subband image coder based on the measure of just-noticeable-distortion profile", Circuits and Systems for Video Technology, IEEE Transactions on, vol. 5, no. 6, pp. 467-476, Dezember 1995, verwiesen.

Für das erfindungsgemäße Verfahren bzw. die erfindungsgemäße Vorrichtung kann der oben beschriebene JND-Algorithmus zum Ermitteln der Toleranzbereiche bzw. der Toleranzgrenze verwendet werden. Es versteht sich, dass aber grundsätzlich auch andere Algorithmen oder Modelle zum Ermitteln des Toleranzbereichs verwendet werden können. Dies gilt insbesondere für technische Anwendungen, für die keine JND-Funktion existiert.

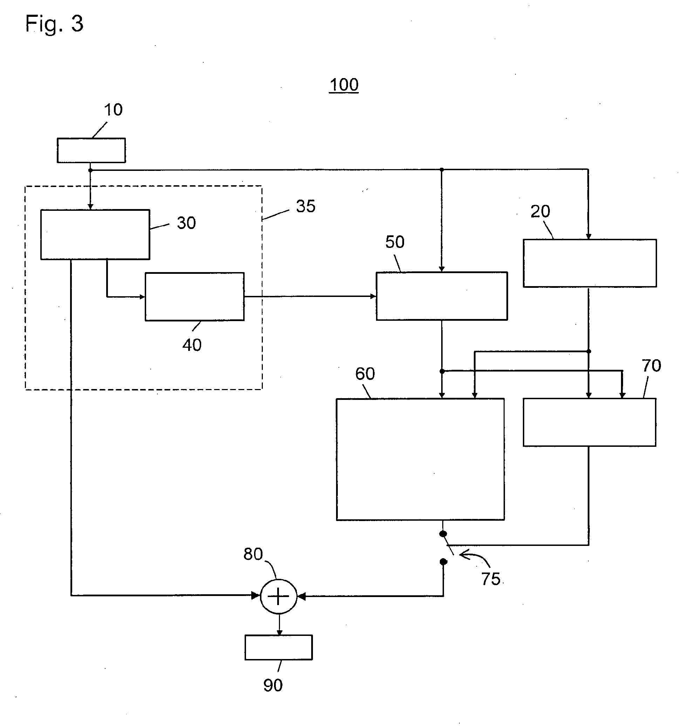

Die **Figur 3** zeigt eine schematische Darstellung des Verfahrens bzw. der Vorrichtung 100 gemäß einer Ausführungsform der Erfindung.

Mit der Vorrichtung 100 kann ein Eingangsdatensatz 10 komprimiert und ein Ausgangsdatensatz 90 bereitgestellt bzw. ausgegeben werden. Die Vorrichtung 100 umfasst eine Toleranzbereichsermittlungseinheit 20, einen verlustbehafteten Encoder 30, eine Decodiereinheit 40, eine Subtrahiereinheit 50, eine Korrekturwerterzeugungseinheit 60, eine Vergleichseinheit 70 und eine Ausgangsdatensatz-Bereitstellungseinheit 80 zum Bereitstellen des Ausgangsdatensatzes 90. Der verlustbehaftete Encoder 30 und der Decoder 40 bilden einen verlustbehafteten CODEC 35.

Mit Hilfe der Toleranzbereichsermittlungseinheit 20 wird für jeden i-ten Wert des Eingangsdatensatzes 10 ein Toleranzbereich T(i) ermittelt. Der Toleranzbereich kann für jeden Wert des Eingangsdatensatzes 10 ortsabhängig und abhängig von zu dem jeweiligen Wert benachbarten Werten bestimmt werden. Die Bestimmung des Toleranzbereichs kann insbesondere auf einem Just-Noticeable-Distortion-Algorithmus basieren, wie er beispielhaft anhand der **Figuren 1 und 2** erläutert wurde. Es ist aber auch möglich, dass die Toleranzbereiche auf eine andere Weise ermittelt, vorgegeben oder festgelegt werden. Beispielsweise kann in der Thermografie der Toleranzbereich von dem Temperaturwert selbst abhängen. Beispielsweise kann für ein dimensionelles Messen von Bildern der Toleranzbereich bei den Kanten der Bilder gleich oder nahezu Null, d.h. sehr klein gewählt sein, da die Bildkanten die Messwerte beeinflussen können.

Mit Hilfe des Encoders 30 werden encodierte verlustbehaftete Werte auf Basis der Eingangswerte bzw. des Eingangsdatensatzes 10 erzeugt. Ein oder mehrerer dieser verlustbehafteten Werte kann den Toleranzbereich verletzen, d.h. außerhalb des Toleranzbereichs liegen und somit eine wahrnehmbare Distorsion hervorrufen.

Um diese Werte, welche außerhalb des Toleranzbereichs liegen, ausfindig zu machen, werden mit Hilfe der Decodiereinheit 40 zu den Eingangswerten zugehörige decodierte verlustbehaftete Werte erzeugt. Die Decodiereinheit 40 ist eine Einheit zum Erzeugen decodierter Werte. Vorzugsweise ist die Decodiereinheit 40 ein Decoder.

Die decodierten Daten bzw. die decodierten verlustbehafteten Werte können z.B. durch ein Decodieren der encodierten verlustbehafteten Werte erzeugt werden. Jedoch können die decodierten Daten nicht nur durch ein direktes bzw. vollständiges Decodieren, sondern auch auf andere Weise erzeugt werden. Im Folgenden werden zwei Beispiele dazu angeführt:

Typischerweise besteht ein Encoder aus drei Teilen. Im ersten Teil wird eine Signaltransformation berechnet oder die Differenz eines i-ten Eingangswertes von einem geschätzten Wert berechnet. Im zweiten Teil wird eine Quantisierung durchgeführt, die die Verluste erzeugt und im dritten Teil wird eine verlustlose Entropie-Codierung durchgeführt. Werden nun statt den Daten am Ausgang des Entropie-Encoders die Daten nach der Quantisierung, also vor der Entropie-Codierung, in die Decodiereinheit 40 übergeben, muss in dieser Einheit 40 keine Entropie-Decodierung durchgeführt werden.

Ein anderes Beispiel für eine Decodiereinheit 40, die die decodierten Daten ohne ein Decodieren mittels eines Decoders ermittelt, ist eine Einheit, die die decodierten Daten unmittelbar aus den Originaldaten durch eine analytische Formel berechnen kann. Ein Beispiel für eine solche Formel wäre, jeden i-ten Wert mit ungeradem i um einen Graustufenwert zu erhöhen und jeden i-ten Wert mit geradem i um einen Graustufenwert zu erniedrigen. Voraussetzung für den Einsatz dieser Formel ist, dass diese exakt die Veränderung der Werte am Eingang durch die verlustbehaftete Encodierung beschreibt.

Jeder decodierte verlustbehaftete Wert wird mit Hilfe der Subtrahiereinheit 50 von dem jeweils zugehörigen Eingangswert des Eingangsdatensatzes 10 subtrahiert, wodurch Differenzwerte erzeugt werden.

Jeder der erzeugten Differenzwerte wird mit Hilfe der Vergleichseinheit 70 mit dem jeweils zugehörigen ermittelten Toleranzbereich verglichen, d.h. für jeden Wert des Eingangsdatensatzes 10 wird ein solcher Vergleich vorgenommen und z.B. ein Vergleichswert bestimmt.

Mit Hilfe der Korrekturwerterzeugungseinheit 60 werden auf Basis der Differenzwerte encodierte Korrekturwerte erzeugt. Beispielsweise wird eine verlustlose oder eine verlustbehaftete Kompression des Differenzwertes eines oder jeden i-ten verlustbehafteten Wertes durchgeführt.

In Abhängigkeit des Vergleichsergebnisses der Vergleichseinheit 70 wird ein Ausgangsdatensatz 90 mit Hilfe der Ausgangsdatensatz-Bereitstellungseinheit 80 bereitgestellt. Falls ein mit der Decodiereinheit bzw. dem Decoder 40 decodierter Wert nicht in dem Toleranzbereich liegt, wird der zugehörige Korrekturwert, insbesondere der zugehörige verlustlos oder verlustbehaftete komprimierte Differenzwert, zu den mit dem Encoder 30 komprimierten verlustbehafteten Werten bzw. zu dem zugehörigen mit dem Encoder 30 komprimierten verlustbehafteten Wert übertragen. Dieses Entscheidungskriterium ist in der **Figur 3** mit Hilfe des Schalters 75 angedeutet.

Der Ausgangsdatensatz 90 kann somit die mit dem Encoder 30 komprimierten verlustbehafteten Werte und/oder die übertragenen Korrekturwerte und/oder eine Kombination davon umfassen. Insbesondere kann der Ausgangsdatensatz einen Bitdatenstrom umfassen, der sich aus einem Bitdatenstrom der verlustbehafteten komprimierten Werte, welche teilweise den Toleranzbereich verletzen, und einem zusätzlichen Bitdatenstrom komprimierter Korrekturwerte bzw. Differenzwerte zusammensetzt.

Zum Beispiel können in einem Zeitmultiplexverfahren abwechselnd Daten der verlustbehafteten Werte und der Korrekturwerte übertragen werden. Um Beginn und Ende der abwechselnden Daten der verlustbehafteten Werte und der Korrekturwerte dieser Übertragungen zu charakterisieren, können Marker in Form von Kennwörtern in den Datenstrom eingefügt werden oder es werden zeitliche Zuordnungen zur Übertragung der Daten festgelegt.

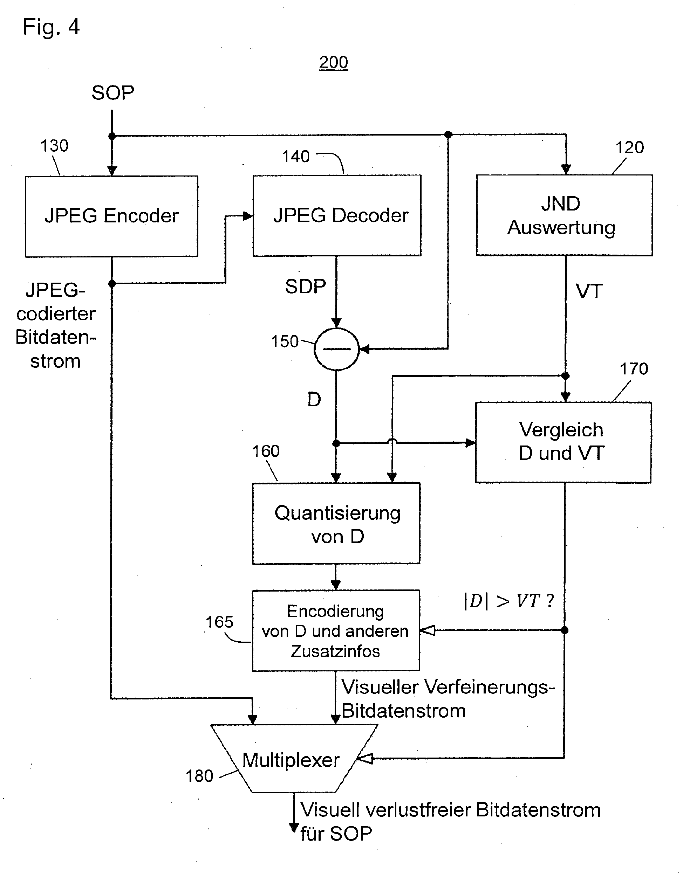

Die **Figur 4** zeigt eine schematische Darstellung eines Verfahrens bzw. einer Vorrichtung 200 gemäß einer beispielhaften Ausführungsform der vorliegenden Erfindung. In dieser beispielhaften Ausführungsform wird eine Bildkompression mit Hilfe des JPEG-CODECs durchgeführt. Die Vorrichtung 200 kann daher auch als ein visuell verlustloser Encoder bezeichnet werden.

Die Vorrichtung 200 umfasst einen Standard JPEG Encoder 130 und einen Standard JPEG Decoder 140, eine spatial domain Just-Noticeable-Distortion-Messeinheit 120, eine Entscheidungs- oder Vergleichseinheit 170, welche pixelweise einen Vergleich der durch die JPEG-Kompression verursachten Distorsion und des von der JND-Messeinheit 120 ermittelten Wahrnehmungs-Schwellenwertes durchführt, und eine Korrekturwerterzeugungseinheit, welche in diesem Ausführungsbeispiel eine Quantisierungseinheit 160 und eine Encodierungseinheit 165 umfasst und welche Verfeinerungs-Informationen für diejenigen JPEG encodierten Pixel, deren Distorsion den Wahrnehmungs-Schwellenwert übersteigt, bereitstellt bzw. encodiert.

Der Eingang der in der **Figur 4** dargestellten Vorrichtung 200 ist ein Satz von originalen Pixel (SOP), welche encodiert werden sollen. Ein SOP kann z.B. im Fall von JPEG ein 8 x 8 Block eines Originalbildes sein. Der SOP bildet den Eingangsdatensatz des Standard JPEG Encoders 130, welcher einen JPEGencodierten Bitdatenstrom für den SOP erzeugt. Der encodierte Bitdatenstrom oder ein äquivalenter Satz an Informationen, z.B. quantisierte Koeffizienten einer diskreten Kosinus-Transformation, wird nun zu dem online JPEG Decoder 140 weitergeleitet, welcher einen Satz decodierter Pixel (SDP) rekonstruiert. Die Distorsion D, welche aufgrund der JPEG Kompression entstanden ist, ist durch die Differenz zwischen SOP und SDP gegeben. In der Zwischenzeit bzw. gleichzeitig wird ein Wahrnehmungs-Schwellenwert (engl. visibility threshold oder kurz VT) für jedes Pixel des SOPs mittels des JND-Modells in der Pixel-Domäne bzw. mittels der JND-Einheit 120 ermittelt bzw. gemessen. Nach einem pixelweisen Vergleich zwischen D und VT, werden Orte, an denen Distorsionen auftreten, welche die Wahrnehmungs-Schwelle übersteigen, als Orte, welche eine wahrnehmbare bzw. visuelle Distorsion aufweisen, markiert. Die visuelle Qualität an solchen Orten muss somit für ein visuell verlustloses Encodieren bzw. Komprimieren verbessert werden. Sofern ein Pixel-Ort bzw. ein Pixel verfeinert werden muss, wird zunächst die zu dem Pixel zugehörige Distorsion mittels einer Quantisierung bzw. einer Quantisierungseinheit 160 komprimiert und anschließend zusammen mit weiteren Zusatzinformationen wie z.B. Ort, Quantisierungs-Schwelle, usw., mit dem Entropie-Encoder 165 Entropie-encodiert. Während der Quantisierung sollte gewährleistet werden, dass die final decodierten Pixel eine maximale Distorsion, welche durch VT gegeben ist, aufweisen.

Sämtliche encodierte Informationen, welche zum Verfeinern der Pixel-Qualität über Standard JPEG hinaus dienen, werden als visueller Verfeinerungs-Bitdatenstrom bezeichnet. Schließlich wird der vom JPEG Encoder 130 erzeugte Bitdatenstrom mit Hilfe eines Multiplexers 180 mit dem visuellen Verfeinerungs-Bitdatenstrom kombiniert, um den visuellen verlustfreien Bitdatenstrom für den SOP zu bilden.

Anders als bei herkömmlichen Bild-Encoder, bei denen das Originalbild nur zur Kompression verwendet wird, verwendet das erfindungsgemäße Verfahren zusätzlich das Originalbild, um die Distorsion zu bestimmen, welche durch die Standard JPEG-Komprimierung verursacht wird, und um einen Wahrnehmungs-Schwellenwert auf Basis eines bekannten JND-Modells zu ermitteln. Das Encodieren der visuellen Verfeinerungs-Informationen für JPEG-codierter Pixel mit Distorsionen jenseits des Wahrnehmungs-Schwellenwertes basieren auf eine Quantisierung der Distorsion und ein Übertragen des Ortes der wahrnehmbaren bzw. sichtbaren Distorsion.

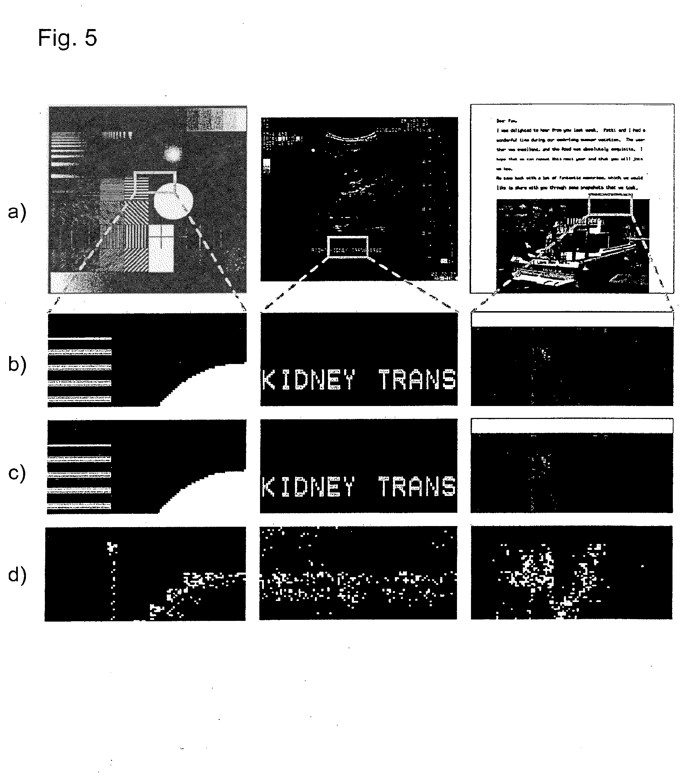

Die Effektivität der Verwendung des oben beschriebenen JND-Modells, um Pixel mit wahrnehmbaren Distorsionen in einem Standard JPEG-decodierten Bild ausfindig zu machen, ist in der **Figur 5** illustriert.

Die **Figur 5** zeigt fotografische Abbildungen zur wahrnehmbaren Distorsion in einem beispielhaften Standard JPEG komprimierten Bild. Dabei sind in der **Figur 5a)** drei Originalbilder gezeigt, während in der **Figur 5b)** jeweils ein vergrößerter Ausschnitt der drei Originalbilder dargestellt ist. In der **Figur 5c)** sind die entsprechenden vergrößerten Ausschnitte des JPEG komprimierten Bildes mit einem Qualitätsfaktor von 85 gezeigt, und in der **Figur 5d)** sind die visuell wahrnehmbaren Distorsionen der JPEG-komprimierten Bilder in den entsprechenden vergrößerten Ausschnitten dargestellt, welche mit dem JND-Modell ermittelt wurden.

Für jedes Pixel in dem vergrößerten Ausschnitt der **Figur 5** wurde die Differenz zwischen den Original-Pixel und den JPEG-decodierten Pixel berechnet und mit einem Wahrnehmungs-Schwellenwert, welcher durch das JND-Modell auf Basis des Originalbildes ermittelt wurde, verglichen. Solche Pixelbereiche, für die die JPEGcodierten Distorsionen über dem Wahrnehmungs-Schwellenwert liegen, sind in der **Figur 5d)** als weiße Punkte dargestellt. Es kann eine deutliche Korrelation zwischen den Pixel-Orten in den JPEG-Bildern der **Figur 5c),** an denen eine Distorsion wahrnehmbar ist, und den Pixel-Orten, die in der **Figur 5d)** als weiße Punkte gekennzeichnet sind, festgestellt werden.

Für den Fall, dass ein decodiertes Pixel mit Hilfe des JND-Modells mit einer wahrnehmbaren Distorsion auf Grund der Standard JPEG-Kompression ausfindig gemacht wurde, wird erfindungsgemäß ein Korrektur- oder Verfeinerungswert für dieses Pixel zusätzlich zu dem Standard JPEG-Bitdatenstrom gesendet bzw. übertragen. Dieser Korrekturwert kann als ein deterministischer Offset-Wert betrachtet werden, welcher zu dem Standard JPEG-decodierten Pixelwert derart hinzugefügt wird, so dass die Distorsion in dem final decodierten Pixel innerhalb des JND-Toleranzbereichs bzw. unterhalb des JND-Schwellenwertes liegt.

Für die Erzeugung bzw. Übertragung des Korrekturwerts gibt es im Prinzip die folgenden zwei Möglichkeiten:

i) Übertragen der Differenz zwischen der JPEG-induzierten Distorsion und dem JND-Schwellenwert, oder

ii) Übertragen der JPEG-induzierten Distorsion selbst.

Im Fall i) muss der Differenzwert verlustfrei encodiert werden, da ansonsten nicht gewährleistet werden kann, dass die Distorsion in dem decodierten Pixel innerhalb des Toleranzbereiches des JND-Modells liegt. Im Fall i) ist eine Distorsion in dem final decodierten Bild stets gleich dem JND-Schwellenwert.

Der Fall ii) dagegen erlaubt eine verlustbehaftete Kompression, z.B. durch eine Quantisierung des Korrekturwertes derart, dass der final decodierte Pixelwert innerhalb eines Unschärfebereichs um den originalen Pixelwert liegt, wobei der Unschärfebereich durch den JND-Schwellenwert vorgegeben ist. Die Quantisierungs-Einheit muss dann eine obere Grenze der Distorsion sicherstellen.

Beispielsweise kann folgende Quantisierung verwendet werden:

$$Q(\varepsilon_{i,j}) = sign(\varepsilon_{i,j}) \left\lfloor \frac{\left|\varepsilon_{i,j}\right| + \delta_{i,j}}{2\delta_{i,j} + 1} \right\rfloor \qquad (5),$$

wobei $i, j$ die Zeilen- und Spalten-Indizes eines Pixels sind, und wobei $\varepsilon_{i,j}$ die JPEG-induzierte Distorsion ist. Der verlustbehaftete Codierungs-Parameter $\delta$ legt den maximalen Kodierungsfehler fest. Die Größe des Quantisierungs-Schritt ist durch $2\delta + 1$ gegeben. In JPEG-LS ist der Wert von $\delta$ für einen vollständigen Scan fest. Da JND den Wahrnehmungs-Schwellenwert für die final decodierte Distorsion bereitstellt, kann $\delta_{i,j} = |JND(i, j)|$ gesetzt werden, was effektiv die Wahrnehmbarkeit von Quantisierungs-Artefakten begrenzt. Eine Dequantisierung kann wie folgt erfolgen:

$$\hat{\varepsilon}_{i,j} = Q(\varepsilon_{i,j}) \cdot (2\delta_{i,j} + 1) \qquad (6),$$

wobei $\hat{\varepsilon}$ die dequantisierte Distorsion ist. Aus Gleichung (6) wird deutlich, dass ein Decoder Informationen sowohl über den Pixel-Ort als auch über den verlustbehafteten Quantisierungs-Parameter, welcher von dem an dem Pixel-Ort $(i,j)$ gemessenen JND-Wert abhängt, benötigt.

Für eine verbesserte Codierungs-Effizienz kann die Übertragung des verlustbehafteten Quantisierungs-Parameters weggelassen werden, indem er als untere Grenze aller JND-Werte, welche über das gesamte Bild gemessen wurden, vordefiniert wird. Es kann gezeigt werden, dass unter normalen Betrachtungs-Bedingungen die untere Grenze des JND-Wertes gleich 3 ist. Somit wurde für die im Rahmen der vorliegenden Erfindung präsentierten Ergebnisse $\delta_{i,j} = 3$, $\forall i, j \in 1...N$ gesetzt, wobei $N$ von der jeweiligen Bildgröße abhängt.

Der quantisierte Korrekturwert kann mit Hilfe eines Hardware-effizienten Entropie-Encoders encodiert werden. Die verbleibenden Informationen, welche für eine Decodierung nötig sind, sind die Orte der JPEG-decodierten Pixels, deren Distorsionen ihre jeweiligen Wahrnehmungs-Schwellenwerte überschreiten.

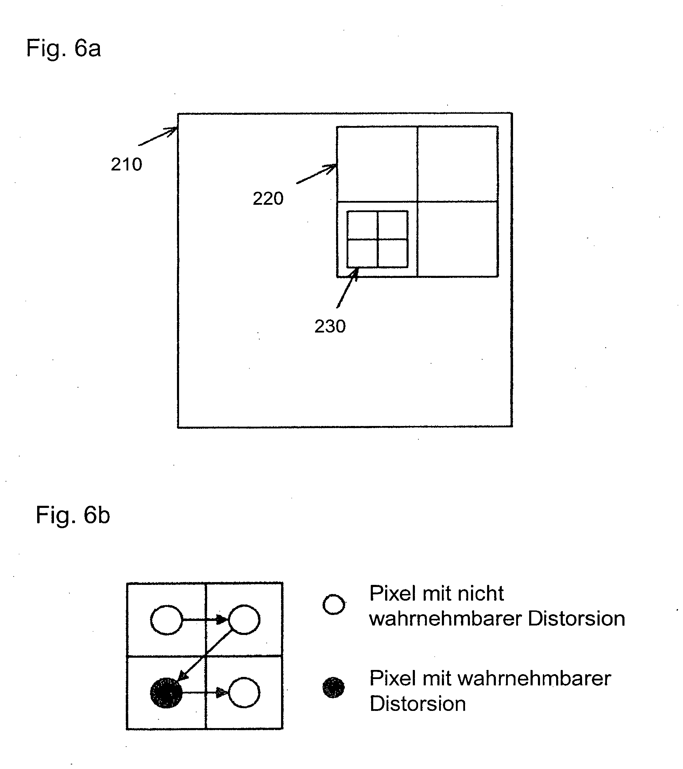

Um den Ort eines JPEG decodierten Pixels, dessen Distorsion seinen Wahrnehmungs-Schwellenwert überschreitet, zu signalisieren, kann eine sogenannte Quadtree-Darstellung verwendet werden. Die **Figur 6a)** zeigt ein Beispiel einer Unterteilung eines 8 x 8 Blocks 210 in vier 4 x 4 Unterblöcke 220, wobei jeder der vier 4 x 4 Unterblöcke 220 wiederum in vier 2 x 2 Unterblöcke 230 aufgeteilt werden kann.

Ein erstes Bit wird zunächst gesendet, um anzudeuten, ob der aktuelle Satz von JPEG-decodierten Pixel, d.h. ein 8 x 8 Block, eine wahrnehmbaren Distorsion beinhaltet. Sofern der 8 x 8 Block wahrnehmbare Distorsionen enthält, wird dieser aufgeteilt und die vier 4 x 4 Unterblöcke werden erneut auf Pixel mit einer wahrnehmbaren Distorsion untersucht. Ein einzelnes Bit wird jeweils für jeden 4 x 4 Unterblock gesendet, um anzudeuten, ob er eine wahrnehmbare Distorsion beinhaltet. Wenn er eine wahrnehmbare Distorsion beinhaltet, wird der 4 x 4 Block unterteilt und jeder der dadurch entstandenen 2 x 2 Unterblöcke wird mittels Raster-Scannen, wie es in der **Figur 6b** gezeigt ist, auf Pixel mit einer wahrnehmbaren Distorsion untersucht.

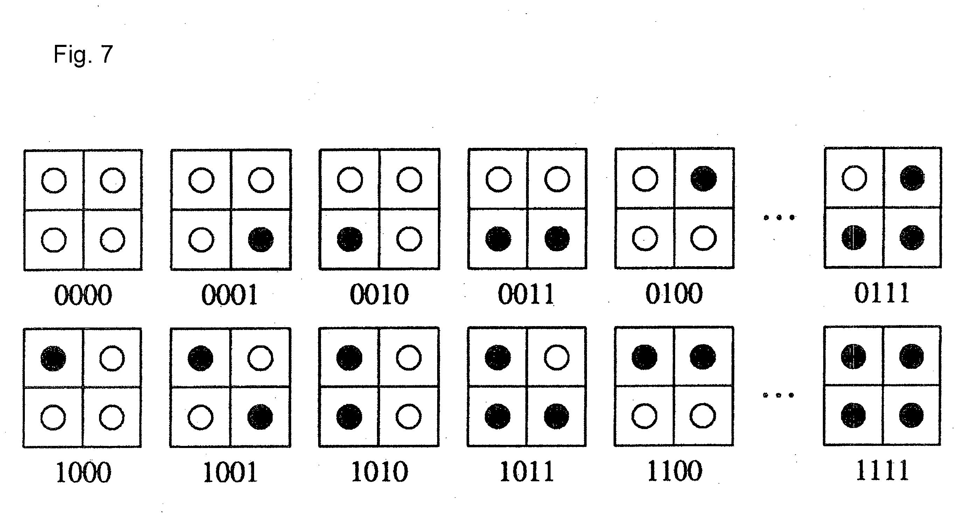

Nach jedem Scan wird ein Verfeinerungsmuster, welches aus 4 Bits besteht, erzeugt, wobei ein Bit den Wert 1 hat, wenn das gescannte Pixel eine wahrnehmbare Distorsion aufweist, und 0 sonst. In der **Figur 7** sind die 16 möglichen Verfeinerungsmuster für einen 2 x 2 Unterblock dargestellt.

Für jeden Satz von originalen Pixel können somit drei Typen von lokaler Distorsions-Information signalisiert bzw. übertragen werden:

- 1 Bit Distorsions-Wahrnehmung für den 8 x 8 Block,
- 1 Bit Distorsions-Wahrnehmung für den 4 x 4 Block, und
- 4 Bit Verfeinerungsmuster für jeden 2 x 2 Block.

Auf dem Level des 8 x 8 Blocks zeigte die 1 Bit Distorsions-Wahrnehmungs-Information keine signifikant unausgewogene Verteilung. Daher wurde für die im Rahmen dieser Erfindung gemachten Tests dieses Bit ohne Entropie-Codierung gesendet. Entsprechend wurde auch für die 1 Bit Distorsions-Wahrnehmungs-Information des 4 x 4 Unterblocks keine Entropie-Codierung durchgeführt. Innerhalb des 2 x 2 Unterblocks dagegen, zeigten die Verfeinerungsmuster eine unausgewogene Verteilung, so dass hier eine Entropie-Codierung, z.B. nach Huffman, sinnvoll ist und angewendet wurde.

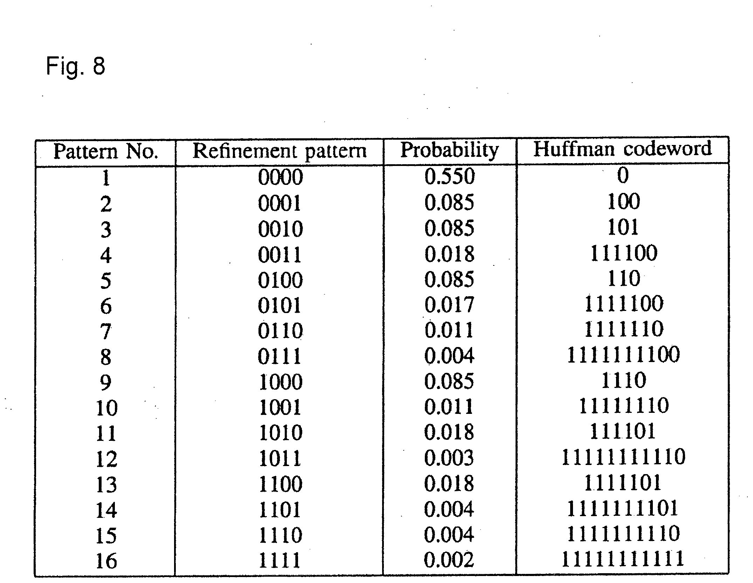

Die Tabelle der **Figur 8** zeigt die Wahrscheinlichkeitsverteilung der Verfeinerungsmuster und die entsprechenden Huffman-Code-Wörter, wobei angemerkt wird, dass die Verteilungen mit einer mittleren JPEG Qualität als Basis-Codec gemessen wurden.

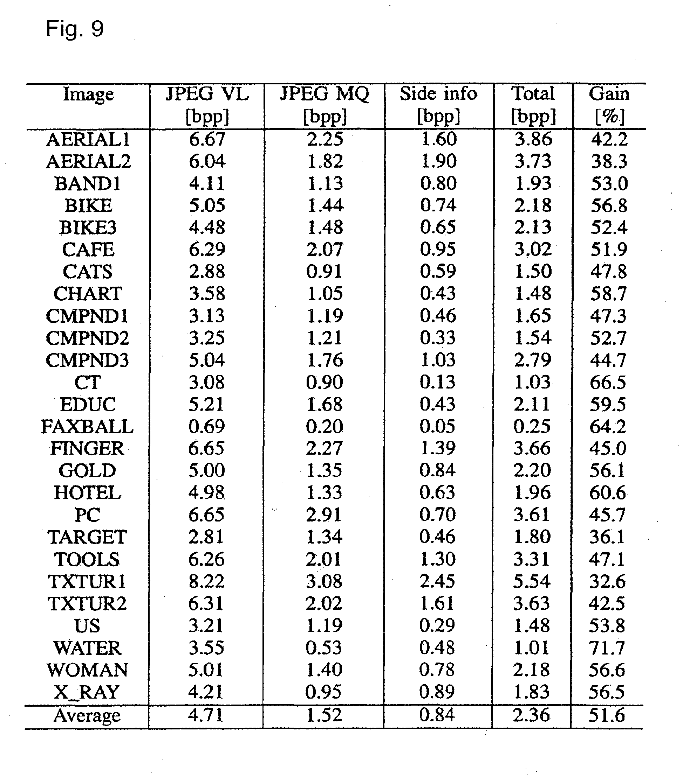

Die Tabelle der **Figur 9** zeigt experimentelle Ergebnisse des erfindungsgemäßen Verfahrens im Vergleich zu einer herkömmlichen Standard JPEG-Kompression von ITU-T Testbildern. In der zweiten und dritten Spalte dieser Tabelle ist jeweils die komprimierte Größe in Bits per Pixel (bpp) für eine JPEG-Kompression mit hoher Qualität, d.h. für eine visuell verlustlose JPEG-Kompression (engl. visually lossless JPEG bzw. JPEG VL), und einer JPEG-Kompression mit mittlerer Qualität (JPEG MQ) angegeben. Die vierte Spalte der Tabelle zeigt die Größe der Zusatzinformationen (side info), welche gemäß des erfindungsgemäßen Verfahrens z.B. durch die Erzeugung der Korrekturwerte, generiert werden. Die fünfte Spalte der Tabelle gibt die Gesamtgröße gemäß des erfindungsgemäßen Verfahrens an, während die sechste Spalte die prozentuale Verbesserung (gain) des erfindungsgemäßen Verfahrens im Vergleich zur herkömmlichen Standard JPEG-Kompression bei gleicher Bildqualität zeigt.

Wie der Tabelle in der **Figur 9** entnommen werden kann, ist die Performance des erfindungsgemäßen Verfahrens im Vergleich zu dem herkömmlichen Standard JPEG-Codec zwischen 30% und 70%, d.h. im Schnitt um etwa 50%, höher.

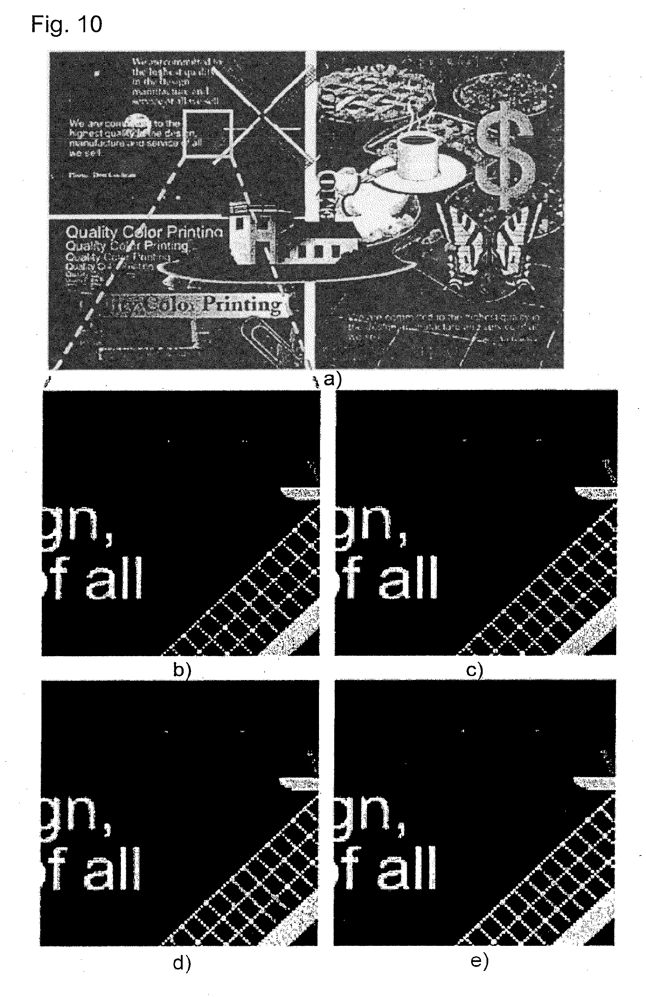

Die **Figur 10** zeigt einen visuellen Vergleich eines Originalbildes (Bild a bzw. b), des entsprechenden JPEG komprimierten Bildes mit hoher Qualität (Bild c), des entsprechenden JPEG-komprimierten Bildes mit mittlerer Qualität (Bild d), und des entsprechenden mit dem erfindungsgemäßen Verfahren komprimierten Bildes (Bild e). Der **Figur 10** kann entnommen werden, dass das mit dem erfindungsgemäßen Verfahren komprimierte Bild e) qualitativ mit dem JPEG komprimierten Bild mit hoher Qualität, d.h. Bild c), vergleichbar ist und dass ein Unterschied zum originalen Bild b) kaum erkennbar ist. Darüber hinaus ist erkennbar, dass wahrnehmbare Artefakte, welche bei dem JPEG-komprimierten Bild mit mittlerer Qualität, d.h. bei dem Bild d), auftreten, durch das erfindungsgemäße Verfahren effektiv reduziert bzw. vermieden werden konnten.

Das erfindungsgemäße Verfahren bzw. die erfindungsgemäße Vorrichtung kann in effizienter Weise in Standard Software bzw. Hardware, insbesondere in Real-time Software bzw. Hardware, welche auch mit herkömmlichen Kompressions-Standards kompatibel ist, implementiert werden.

**Bezugszeichenliste**

| | |
|---|---|
| 10 | Eingangsdatensatz |
| 20 | Toleranzbereichsermittlungseinheit |
| 30 | Verlustbehafteter Encoder |
| 35 | Verlustbehafteter Codec |
| 40 | Decodiereinheit / Decoder |
| 50 | Subtrahiereinheit |
| 60 | Korrekturwerterzeugungseinheit |
| 70 | Vergleichseinheit |
| 75 | Symbolischer Schalter |
| 80 | Ausgangsdatensatz-Bereitstellungseinheit |
| 90 | Ausgangsdatensatz |
| 100 | Vorrichtung / Wahrnehmbar verlustloser Encoder |
| 120 | Just-Noticeable-Distortion-Einheit |
| 130 | JPEG Encoder |
| 140 | JPEG Decoder |
| 150 | Subtrahiereinheit / Subtrahierer |
| 160 | Quantisierungseinheit |
| 165 | Entropie-Encoder |
| 170 | Vergleichseinheit |
| 180 | Multiplexer |
| 200 | Vorrichtung / Visuell verlustloser Encoder |
| 210 | 8 x 8 Block |
| 220 | 4 x 4 Unterblock |
| 230 | 2 x 2 Unterblock |

**Patentansprüche**

1.  Verfahren zum Komprimieren eines Eingangsdatensatzes (10), welcher einen oder mehrere Eingangswerte umfasst, umfassend die Schritte:

    - für jeden Eingangswert Ermitteln eines Toleranzbereichs;
    - Erzeugen encodierter verlustbehafteter Werte durch ein verlustbehaftetes Encodieren der Eingangswerte;
    - Erzeugen von zu den Eingangswerten (10) zugehörigen decodierten verlustbehafteten Werten, insbesondere durch ein Decodieren der encodierten verlustbehafteten Werte;
    - Erzeugen von Differenzwerten durch Subtrahieren jedes decodierten verlustbehafteten Wertes von dem jeweils zugehörigen Eingangswert;
    - Vergleichen jedes Differenzwertes mit dem jeweils zugehörigen ermittelten Toleranzbereich, um festzustellen, ob der Differenzwert innerhalb des jeweils zugehörigen Toleranzbereichs liegt;
    - Erzeugen von zu den encodierten verlustbehafteten Werten zugehörigen encodierten Korrekturwerten auf Basis der Differenzwerte, wobei die encodierten Korrekturwerte Offset-Werte sind, welche zu den zugehörigen encodierten verlustbehafteten Werten addiert werden können, wobei encodierte Korrekturwerte nur für solche Differenzwerte erzeugt werden, die außerhalb des jeweils zugehörigen ermittelten Toleranzbereichs liegen; und
    - Bereitstellen eines Ausgangsdatensatzes (90) in Abhängigkeit des Vergleichs der Differenzwerte mit den Toleranzbereichen, wobei das Bereitstellen des Ausgangsdatensatzes (90) ein Bereitstellen von kombinierten encodierten Werten umfasst, wobei die kombinierten encodierten Werte durch ein Zusammenfügen der encodierten verlustbehafteten Werte und derjenigen encodierten Korrekturwerte, deren zugehörigen Differenzwerte außerhalb des zugehörigen ermittelten Toleranzbereichs liegen, erhalten werden.

**2.** Verfahren nach Anspruch 1, wobei das Erzeugen der encodierten Korrekturwerte eine verlustlose oder verlustbehaftete Encodierung und/oder Kompression der Differenzwerte umfasst.

**3.** Verfahren nach Anspruch 1, wobei das Erzeugen der encodierten Korrekturwerte eine verlustlose Encodierung und/oder Kompression der Differenz zwischen den Differenzwerten und einer Toleranzgrenze umfasst.

**4.** Vorrichtung (100) zum Komprimieren eines Eingangsdatensatzes (10), welcher einen oder mehrere Eingangswerte umfasst, umfassend:

- eine Toleranzbereichsermittlungseinheit (20) zum Ermitteln eines Toleranzbereichs;
- einen Encoder (30) zum Erzeugen encodierter verlustbehafteter Werte durch ein verlustbehaftetes Encodieren der Eingangswerte;
- eine Decodiereinheit (40) zum Erzeugen von zu den Eingangswerten zugehörigen decodierten verlustbehafteten Werten, insbesondere durch ein Decodieren der encodierten verlustbehafteten Werte;
- eine Subtrahiereinheit (50) zum Subtrahieren jedes decodierten verlustbehafteten Wertes von dem jeweils zugehörigen Eingangswert und Erzeugen von Differenzwerten;
- eine Vergleichseinheit (70) zum Vergleichen jedes Differenzwertes mit dem jeweils zugehörigen ermittelten Toleranzbereich, um festzustellen, ob der Differenzwert innerhalb des jeweils zugehörigen Toleranzbereichs liegt;
- eine Korrekturwerterzeugungseinheit (60) zum Erzeugen von zu den encodierten verlustbehafteten Werten zugehörigen encodierten Korrekturwerten auf Basis der Differenzwerte, wobei die encodierten Korrekturwerte Offset-Werte sind, welche zu den zugehörigen encodierten verlustbehafteten Werten addiert werden können, wobei die Korrekturwerterzeugungseinheit (60) ausgelegt ist, encodierte Korrekturwerte nur für solche Differenzwerte zu erzeugen, die außerhalb des jeweils zugehörigen ermittelten Toleranzbereichs liegen; und
- eine Ausgangsdatensatz-Bereitstellungseinheit (80) zum Bereitstellen eines Ausgangsdatensatzes (90) in Abhängigkeit eines Vergleichs der Differenzwerte mit den Toleranzbereichen, wobei der Ausgangsdatensatz (90) kombinierte encodierte Werte umfasst, wobei die kombinierten encodierten Werte aus den encodierten verlustbehafteten Werten und denjenigen encodierten Korrekturwerten, deren zugehörigen Differenzwerte außerhalb des zugehörigen ermittelten Toleranzbereichs liegen, zusammengefügt sind.

**5.** Vorrichtung nach Anspruch 4,

wobei der Encoder (30) zum Erzeugen encodierter verlustbehafteter Werte ein JPEG-Encoder oder ein MP3-Encoder oder ein MPEG-Encoder oder ein H265-Encoder ist, und/oder
wobei die Decodiereinheit (40) zum Erzeugen von zu den Eingangswerten zugehörigen decodierten verlustbehafteten Werten ein Decoder ist, und/oder
wobei die Toleranzbereichsermittlungseinheit (20) ausgelegt ist, den Toleranzbereich auf Basis eines Just-Noticeable-Distortion-Algorithmus zu ermitteln, und/oder
wobei die Korrekturwerterzeugungseinheit (60) eine Quantisierungseinheit und/oder einen Entropie-Encoder umfasst, und/oder
wobei die Ausgangsdatensatz-Bereitstellungseinheit (80) einen Multiplexer umfasst.

**6.** Computerprogrammprodukt, welches maschinenlesbaren Programmcode umfasst, der, wenn er geladen wird auf einem Computer, den Computer zur Ausführung eines Verfahrens gemäß einem der Ansprüche 1 bis 3 konfiguriert.

**Claims**

**1.** Method for compressing an input data set (10) which comprises one or more input values, comprising the steps of:

- for each input value, determining a tolerance range;
- generating encoded lossy values by lossy encoding of the input values;
- generating decoded lossy values associated with the input values (10), in particular by decoding the encoded lossy values;
- generating difference values by subtracting each decoded lossy value from the respectively associated input value;
- comparing each difference value with the respectively associated determined tolerance range in order to ascertain whether the difference value is within the respectively associated tolerance range;

- generating encoded correction values associated with the encoded lossy values on the basis of the difference values, wherein the encoded correction values are offset values which can be added to the associated encoded lossy values, wherein encoded correction values are generated only for the difference values that are outside the respectively associated determined tolerance range; and

- supplying an output data set (90) based on the comparison of the difference values with the tolerance ranges, wherein supplying the output data set (90) includes supplying combined encoded values, wherein the combined encoded values are obtained by merging the encoded lossy values and the encoded correction values that have associated difference values that are outside the associated determined tolerance range.

2. Method according to claim 1, wherein generating the encoded correction values comprises lossless or lossy encoding and/or compression of the difference values.

3. Method according to claim 1, wherein generating the encoded correction values comprises lossless encoding and/or compression of the difference between the difference values and a tolerance limit.

4. Device (100) for compressing an input data set (10) which comprises one or more input values, comprising:

- a tolerance range determination unit (20) for determining a tolerance range;
- an encoder (30) for generating encoded lossy values by lossy encoding of the input values;
- a decoding unit (40) for generating decoded lossy values associated with the input values, in particular by decoding the encoded lossy values;
- a subtraction unit (50) for subtracting each decoded lossy value from the respectively associated input value and generating difference values;
- a comparison unit (70) for comparing each difference value with the respectively associated determined tolerance range in order to ascertain whether the difference value is within the respectively associated tolerance range;
- a correction value generation unit (60) for generating encoded correction values associated with the encoded lossy values on the basis of the difference values, wherein the encoded correction values are offset values which can be added to the associated encoded lossy values, wherein the correction value generation unit (60) is configured to generate encoded correction values only for the difference values that are outside the respectively associated determined tolerance range; and
- an output data set supply unit (80) for supplying an output data set (90) based on a comparison of the difference values with the tolerance ranges, wherein the output data set (90) comprises combined encoded values, wherein the combined encoded values are merged from the encoded lossy values and the encoded correction values that have associated difference values that are outside the associated determined tolerance range.

5. Device according to claim 4,

wherein the encoder (30) for generating encoded lossy values is a JPEG encoder, an MP3 encoder, an MPEG encoder or an H265 encoder, and/or
wherein the decoding unit (40) for generating decoded lossy values associated with the input values is a decoder, and/or
wherein the tolerance range determination unit (20) is configured to determine the tolerance range on the basis of a just-noticeable-distortion algorithm, and/or
wherein the correction value generation unit (60) comprises a quantisation unit and/or an entropy encoder, and/or
wherein the output data set supply unit (80) comprises a multiplexer.

6. Computer program product which comprises machine-readable program code which, when loaded on a computer, configures the computer to carry out a method according to any of claims 1 to 3.

## Revendications

1. Procédé de compression d'un ensemble de données d'entrée (10) qui comprend une ou plusieurs valeurs d'entrée, comprenant les étapes :

- pour chaque valeur d'entrée, détermination d'une plage de tolérance ;
- génération de valeurs encodées avec perte par un encodage avec perte des valeurs d'entrée ;

- génération de valeurs décodées avec perte associées aux valeurs d'entrée (10), notamment par un décodage des valeurs encodées avec perte ;

- génération de valeurs de différence par soustraction de chaque valeur décodée avec perte de la valeur d'entrée associée respectivement ;

- comparaison de chaque valeur de différence à la plage de tolérance déterminée associée respectivement pour constater si la valeur de différence se situe au sein de la plage de tolérance associée respectivement ;

- génération de valeurs de correction encodées associées aux valeurs encodées avec perte sur la base des valeurs de différence, dans lequel les valeurs de correction encodées sont des valeurs décalées qui peuvent être ajoutées aux valeurs encodées avec perte associées, dans lequel des valeurs de correction encodées ne sont générées que pour des valeurs de différence telles qu'elles se situent en dehors de la plage de tolérance déterminée associée respectivement ; et

- mise à disposition d'un ensemble de données de sortie (90) en fonction de la comparaison des valeurs de différence aux plages de tolérance, dans lequel la mise à disposition de l'ensemble de données de sortie (90) comprend une mise à disposition de valeurs encodées combinées, dans lequel les valeurs encodées combinées sont obtenues par une fusion des valeurs encodées avec perte et des valeurs de correction encodées dont les valeurs de différence associées se situent en dehors de la plage de tolérance déterminée associée.

2. Procédé selon la revendication 1, dans lequel la génération des valeurs de correction encodées comprend un encodage sans perte ou avec perte et/ou une compression des valeurs de différence.

3. Procédé selon la revendication 1, dans lequel la génération des valeurs de correction encodées comprend un encodage sans perte et/ou une compression de la différence entre les valeurs de différence et une limite de tolérance.

4. Dispositif (100) de compression d'un ensemble de données d'entrée (10) qui comprend une ou plusieurs valeurs d'entrée, comprenant :

- un module de détermination de plage de tolérance (20) pour la détermination d'une plage de tolérance ;
- un encodeur (30) pour la génération de valeurs encodées avec perte par un encodage avec perte des valeurs d'entrée ;
- un module de décodage (40) pour la génération de valeurs décodées avec perte associées aux valeurs d'entrée, notamment par un décodage des valeurs encodées avec perte ;
- un module de soustraction (50) pour la soustraction de chaque valeur décodée avec perte de la valeur d'entrée associée respectivement et la génération de valeurs de différence ;
- un module de comparaison (70) pour la comparaison de chaque valeur de différence à la plage de tolérance déterminée associée respectivement pour constater si la valeur de différence se situe au sein de la plage de tolérance associée respectivement ;
- un module de génération de valeurs de correction (60) pour la génération de valeurs de correction encodées associées aux valeurs encodées avec perte sur la base des valeurs de différence, dans lequel les valeurs de correction encodées sont des valeurs décalées qui peuvent être ajoutées aux valeurs encodées avec perte associées, dans lequel le module de génération de valeurs de correction (60) est conçu pour ne générer des valeurs de correction encodées que pour des valeurs de différence telles qu'elles se situent en dehors de la plage de tolérance déterminée associée respectivement ; et
- un module de mise à disposition d'ensemble de données de sortie (80) pour la mise à disposition d'un ensemble de données de sortie (90) en fonction d'une comparaison des valeurs de différence aux plages de tolérance, dans lequel l'ensemble de données de sortie (90) comprend des valeurs encodées combinées, dans lequel les valeurs encodées combinées sont fusionnées à partir des valeurs encodées avec perte et des valeurs de correction encodées dont les valeurs de différence associées se situent en dehors de la plage de tolérance déterminée associée.

5. Dispositif selon la revendication 4,

dans lequel l'encodeur (30) pour la génération des valeurs encodées avec perte est un encodeur JPEG ou un encodeur MP3 ou un encodeur MPEG ou un encodeur H265, et/ou

dans lequel le module de décodage (40) pour la génération de valeurs décodées avec perte associées aux valeurs d'entrée est un décodeur, et/ou dans lequel le module de détermination de plage de tolérance (20) est conçu pour déterminer la plage de tolérance sur la base d'un algorithme Just Noticeable Distortion, et/ou

dans lequel le module de génération de valeurs de correction (60) comprend un module de quantification et/ou un encodeur entropique, et/ou dans lequel le module de mise à disposition d'ensemble de données de sortie (80) comprend un multiplexeur.

6. Produit de programme informatique qui comprend du code de programme lisible par machine, qui, lorsqu'il est chargé sur un ordinateur, configure l'ordinateur pour la réalisation d'un procédé selon une des revendications 1 à 3.

Fig. 1

Stand der Technik

Fig. 2

**B**

| 1 | 1 | 1 | 1 | 1 |
|---|---|---|---|---|
| 1 | 2 | 2 | 2 | 1 |
| 1 | 2 | 0 | 2 | 1 |
| 1 | 2 | 2 | 2 | 1 |
| 1 | 1 | 1 | 1 | 1 |

**$G_1$**

| 0 | 1 | 0 | -1 | 0 |
|---|---|---|----|---|
| 0 | 3 | 0 | -3 | 0 |
| 0 | 8 | 0 | -8 | 0 |
| 0 | 3 | 0 | -3 | 0 |
| 0 | 1 | 0 | -1 | 0 |

**$G_2$**

| 0 | 0 | -1 | 0  | 0  |
|---|---|----|----|----|
| 0 | 0 | -3 | -8 | 0  |
| 1 | 3 | 0  | -3 | -1 |
| 0 | 8 | 3  | 0  | 0  |
| 0 | 0 | 1  | 0  | 0  |

**$G_3$**

| 0 | 0 | 1  | 0  | 0  |
|---|---|----|----|----|
| 0 | 8 | 3  | 0  | 0  |
| 1 | 3 | 0  | -3 | -1 |
| 0 | 0 | -3 | -8 | 0  |
| 0 | 0 | -1 | 0  | 0  |

**$G_4$**

| 0 | -1 | 0 | 1 | 0 |
|---|----|---|---|---|
| 0 | -3 | 0 | 3 | 0 |
| 0 | -8 | 0 | 8 | 0 |
| 0 | -3 | 0 | 3 | 0 |
| 0 | -1 | 0 | 1 | 0 |

Stand der Technik

19

Fig. 3

Fig. 4

200

SOP

130

JPEG Encoder

140

JPEG Decoder

120

JND Auswertung

JPEG-codierter Bitdaten-strom

SDP

VT

150

D

170

Vergleich D und VT

160

Quantisierung von D

$|D| > VT$ ?

165

Encodierung von D und anderen Zusatzinfos

Visueller Verfeinerungs-Bitdatenstrom

180

Multiplexer

Visuell verlustfreier Bitdatenstrom für SOP

Fig. 5

Fig. 6a

210

220

230

Fig. 6b

○ Pixel mit nicht
wahrnehmbarer Distorsion

● Pixel mit wahrnehmbarer
Distorsion

Fig. 7

| | | | | |
|---|---|---|---|---|
| 0000 | 0001 | 0010 | 0011 | 0100 ... 0111 |
| 1000 | 1001 | 1010 | 1011 | 1100 ... 1111 |

EP 3 335 423 B1

Fig. 8

| Pattern No. | Refinement pattern | Probability | Huffman codeword |
|---|---|---|---|
| 1 | 0000 | 0.550 | 0 |
| 2 | 0001 | 0.085 | 100 |
| 3 | 0010 | 0.085 | 101 |
| 4 | 0011 | 0.018 | 111100 |
| 5 | 0100 | 0.085 | 110 |
| 6 | 0101 | 0.017 | 1111100 |
| 7 | 0110 | 0.011 | 1111110 |
| 8 | 0111 | 0.004 | 1111111100 |
| 9 | 1000 | 0.085 | 1110 |
| 10 | 1001 | 0.011 | 11111110 |
| 11 | 1010 | 0.018 | 111101 |
| 12 | 1011 | 0.003 | 11111111110 |
| 13 | 1100 | 0.018 | 1111101 |
| 14 | 1101 | 0.004 | 1111111101 |
| 15 | 1110 | 0.004 | 1111111110 |
| 16 | 1111 | 0.002 | 11111111111 |

EP 3 335 423 B1

Fig. 9

| Image | JPEG VL [bpp] | JPEG MQ [bpp] | Side info [bpp] | Total [bpp] | Gain [%] |
|---|---|---|---|---|---|
| AERIAL1 | 6.67 | 2.25 | 1.60 | 3.86 | 42.2 |
| AERIAL2 | 6.04 | 1.82 | 1.90 | 3.73 | 38.3 |
| BAND1 | 4.11 | 1.13 | 0.80 | 1.93 | 53.0 |
| BIKE | 5.05 | 1.44 | 0.74 | 2.18 | 56.8 |
| BIKE3 | 4.48 | 1.48 | 0.65 | 2.13 | 52.4 |
| CAFE | 6.29 | 2.07 | 0.95 | 3.02 | 51.9 |
| CATS | 2.88 | 0.91 | 0.59 | 1.50 | 47.8 |
| CHART | 3.58 | 1.05 | 0.43 | 1.48 | 58.7 |
| CMPND1 | 3.13 | 1.19 | 0.46 | 1.65 | 47.3 |
| CMPND2 | 3.25 | 1.21 | 0.33 | 1.54 | 52.7 |
| CMPND3 | 5.04 | 1.76 | 1.03 | 2.79 | 44.7 |
| CT | 3.08 | 0.90 | 0.13 | 1.03 | 66.5 |
| EDUC | 5.21 | 1.68 | 0.43 | 2.11 | 59.5 |
| FAXBALL | 0.69 | 0.20 | 0.05 | 0.25 | 64.2 |
| FINGER | 6.65 | 2.27 | 1.39 | 3.66 | 45.0 |
| GOLD | 5.00 | 1.35 | 0.84 | 2.20 | 56.1 |
| HOTEL | 4.98 | 1.33 | 0.63 | 1.96 | 60.6 |
| PC | 6.65 | 2.91 | 0.70 | 3.61 | 45.7 |
| TARGET | 2.81 | 1.34 | 0.46 | 1.80 | 36.1 |
| TOOLS | 6.26 | 2.01 | 1.30 | 3.31 | 47.1 |
| TXTUR1 | 8.22 | 3.08 | 2.45 | 5.54 | 32.6 |
| TXTUR2 | 6.31 | 2.02 | 1.61 | 3.63 | 42.5 |
| US | 3.21 | 1.19 | 0.29 | 1.48 | 53.8 |
| WATER | 3.55 | 0.53 | 0.48 | 1.01 | 71.7 |
| WOMAN | 5.01 | 1.40 | 0.78 | 2.18 | 56.6 |
| X_RAY | 4.21 | 0.95 | 0.89 | 1.83 | 56.5 |
| Average | 4.71 | 1.52 | 0.84 | 2.36 | 51.6 |

Fig. 10

a)

b)

c)

d)

e)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005036528 A1

**In der Beschreibung aufgeführte Nicht-Patentliteratur**

- SSPQ - spatial domain perceptual image codec based on subsampling and perceptual quantization. **Z. WANG et al.** 19th IEEE International Conference on Image Processing (ICIP), 2012. IEEE, 30 September 2012, 1061-1064
- Transform Coefficient Coding in HEVC. **J. SOLE et al.** IEEE Transactions on circuits and systems for video technology. IEEE Service center, 01 December 2012, 1765-1777
- **K. LIU**. A Just Noticeable-Distortion Based Perceptually Lossless Image Compression Codec. *XP055313903*, 01 June 2012
- A perceptually tuned subband image coder based on the measure of just-noticeable-distortion profile. **C.-H. CHOU** ; **Y.-C. LI**. Circuits and Systems for Video Technology. IEEE, December 1995, vol. 5, 467-476